Europäisches Patentamt

European Patent Office

Office européen des brevets

(19)

(11) Numéro de publication : **0 519 828 A1**

# (12) DEMANDE DE BREVET EUROPEEN

(21) Numéro de dépôt : **92401710.6**

(22) Date de dépôt : **19.06.92**

(51) Int. Cl.$^5$ : **B29C 67/16, C03B 37/10**

(30) Priorité : **20.06.91 FR 9107562**

(43) Date de publication de la demande :
**23.12.92 Bulletin 92/52**

(84) Etats contractants désignés :
**AT BE CH DE DK ES FR GB IT LI NL SE**

(71) Demandeur : **ORGEL**
**"Les Miroirs" 18, Avenue d'Alsace**
**F-92400 Courbevoie (FR)**

(72) Inventeur : **Basin, Gérard**
**2, rue du Verger**
**F-60600 Clermont (FR)**
Inventeur : **Le Breton, Patrick**
**Les Aulnaies, Bat. En no 76, rue Jules Michelet**
**F-60140 Liancourt (FR)**

(74) Mandataire : **Muller, René et al**
**SAINT-GOBAIN RECHERCHE 39, quai Lucien Lefranc**
**F-93304 Aubervilliers (FR)**

(54) **Renforcement de polymeres par de la laine minerale.**

(57) La présente invention concerne un procédé de renforcement de matière, le dispositif permettant la mise en oeuvre du procédé et l'application au renforcement de matière plastique. La résine renforcée est caractérisée en ce qu'elle est obtenue par le mélange à la matière à renforcer de laine minérale, cette laine minérale étant transformée successivement en flocons puis en nodules dont l'histogramme des longueurs de fibres comprend 80 % de fibres inférieures à 0,25 mm.

FIG.1

EP 0 519 828 A1

la présente invention concerne un procédé de renforcement de matière, le dispositif permettant la mise en oeuvre du procédé et l'application de ce procédé au renforcement de matériaux organiques.

Il est connu de renforcer des matières plastiques à l'aide de fibres de verre textiles, obtenues par étirage mécanique. Ces fibres de verre de diamètre régulier, réparti aux alentours de 15 microns sur une fourchette pouvant varier de 2 à 5 microns autour de cette valeur, sont ensuite découpées en brins de longueur constante d'environ 5 mm puis mélangées à un des composants de la matière plastique pour renforcer celle-ci.

Ce procédé présente toutefois l'inconvénient de nécessiter la fabrication de fibres textiles qui sont beaucoup plus onéreuses à obtenir de par leur procédé de fabrication et de par leur composition et à cause du découpage à longueur constante.

D'autre part, ces fibres, lorsqu'elles sont incorporées à une matière qu'elles doivent renforcer, donnent pour résultat une matière dont la rugosité et l'état de surface peuvent ne pas être satisfaisants pour les applications envisagées. En effet, le diamètre des fibres ne peut être réduit à l'étirage sous peine de voir celles-ci se casser. Le diamètre relativement important de ces fibres constitue donc un inconvénient pour l'aspect de surface du produit fini.

D'autres procédés d'obtention de fibres permettant d'obtenir des fibres de diamètre plus faible sont connus. leur principale utilisation est la fabrication de fibres minérales, fibres de verre ou fibres de roche, destinées essentiellement à la réalisation de laines minérales utilisées comme matériaux isolants. A la différence du procédé d'élaboration des fibres de verre textiles, où chaque fibre est étirée mécaniquement à sa sortie d'une filière calibrée, les procédés de production de laines minérales destinées principalement à l'isolation utilisent la force centrifuge et l'étirage par des courants gazeux. Ainsi, le procédé décrit dans le brevet EP 59512 pour la fabrication de fibres de roche, aussi bien que celui du brevet EP 91866 pour la fabrication de fibres de verre, permettent la production en masse, dans des conditions très économiques, de fibres fines de longueurs limitées variées.

Ces fibres minérales obtenues selon un des procédés du type précédent peuvent être utilisées pour renforcer des matières plastiques en particulier des matières thermodurcissables comme enseigné par la demande de brevet japonais 87-249280 pour fabriquer des polyuréthanes renforcés par de la fibre selon la technique "RIM" de moulage par injection réaction. le produit obtenu contient de la fibre de verre d'un diamètre moyen de 5 à 6 $\mu$m et une longueur moyenne de 50 à 60 $\mu$m pour être mélangée à un premier composant liquide et un deuxième composant liquide. De même une autre demande de brevet japonais 85-210383 enseigne une méthode comprenant l'addition d'un polyéther et/ou d'un isocyanate à une fibre transparente ayant un diamètre de fibre inférieur à 6 $\mu$m et une longueur de fibre moyenne de 250 $\mu$m, pour injecter le mélange dans un moule.

On connait également des matières thermoplastiques qui se présentent sous forme de granulés chargés, les charges pouvant être à base de laines minérales.

Les techniques précédentes qui décrivent un produit final obtenu par la technique RIM ou les techniques des matières thermoplastiques et comportant des fibres de laines minérales n'apportent pratiquement pas de solution aux problèmes posés par l'introduction de la fibre dans la résine. Or les fibres de laine destinées à l'isolation se présentent toujours sous forme de matelas et sont évidemment impropres, sous cette forme à être insérées dans des granulés ou à être injectées dans le moule par la technique RIM. En particulier, les techniques de préparation des fibres de laine minérale qui sont essentielles à la réussite de l'opération R.RIM (reinforced - réaction - injection -moulding) ne sont pas traitées dans les documents cités.

En revanche, le brevet US 4 913 956 qui traite du moulage sous pression de résines phénoliques armées de matelas de fibres de verre propose une technique d'enrobage humide puis sec des matelas de fibres tels quels, mais cette technique les rend évidemment impropres à être injectés avec la résine elle-même ou à constituer des granulés.

Un but de l'invention est de proposer un procédé de renforcement d'un polymère par de la laine minérale.

Ce but est atteint par le fait que le procédé de renforcement comporte les étapes suivantes :
- fabrication d'un matelas de laine minérale type isolation ;
- éventuellement, déchiquetage du matelas et/ou de déchets de laine minérale pour former des flocons ;
- nodulage des flocons ou directement des matelas à l'aide d'une noduleuse ;
- mélange des nodules au polymère ou à au moins un des composants fluide du polymère avant durcissement ;
- durcissement du polymère de la manière habituelle.

Selon une autre particularité les nodules comportent des fibres dont l'histogramme des longueurs comprend 80 % de fibres de longueur inférieure à 0,50 mm et, dans une variante, inférieure à 0,25 mm.

Selon une autre particularité le polymère est une matière thermodurcissable.

Selon une autre particularité le polymère est mis en oeuvre selon la technique RIM.

Selon une autre particularité le polymère est à base de polyuréthane.

Dans une variante du procédé de l'invention, le polymère est une matière thermoplastique. Elle est alors de préférence mélangée aux nodules dans une boudineuse.

Selon une particularité de l'invention, la matière thermoplastique est à base de polypropylène.

Selon une autre particularité la fibre minérale est ensimée avec une solution aqueuse comportant un silane, de préférence du type A 1100.

Un autre but est de proposer un dispositif permettant la mise en oeuvre de ce procédé.

Ce but est atteint par le fait que le dispositif comporte une ligne de production de matelas de laine minérale, à l'extrémité de laquelle on dispose éventuellement une déchiqueteuse qui transforme les déchets ou les matelas de laine minérale en flocons, et une noduleuse équipée d'une grille dont les trous ont une dimension comprise entre 4 et 8 mm.

Selon une autre particularité, la noduleuse est équipée d'une grille dont les trous ont pour dimension 6 mm.

Selon une autre particularité, les couteaux de la noduleuse sont distants des contre couteaux d'une distance inférieure à 3 mm et de préférence de 2 mm.

D'autres caractéristiques et avantages de la présente invention apparaîtront plus clairement à la lecture de la description ci-après faite en référence à :

- la figure 1 qui représente de façon schématique le dispositif permettant la mise en oeuvre du procédé selon l'invention ;
- la figure 2 qui représente la noduleuse utilisée dans une des étapes du procédé de l'invention ;
- la figure 3 qui représente de façon schématique la machine permettant la fabrication de matière plastique thermodurcissable renforcée ;
- la figure 4 qui représente un tableau comparatif des propriétés mécaniques de plastiques R.RIM renforcés avec des laines minérales ou des fibres textiles ;
- la figure 5 qui représente un tableau comparatif des rugosités des états de surface des mêmes plastiques R. RIM
- la figure 6 qui représente un exemple d'histogramme des longueurs de fibres obtenues après broyage selon le procédé de l'invention.
- la figure 7 qui montre les performances comparées en module de flexion (7a), contrainte de rupture à la flexion (7b) et à la traction (7c) d'un thermoplastique (polypropylène) renforcé.

Lors des opérations de fabrication d'un matelas de laine minérale selon le procédé connu sous la dénomination "TEL" faisant appel à la centrifugation. La composition vitrifiable est l'une de celles décrites dans le brevet FR 2 443 436. Ce mélange fondu dans un four (1) est amené à des centrifugeuses (2) pour produire des filaments de fibres de verre étirés par un courant gazeux à haute température dirigé le long de la périphérie de l'organe de centrifugation. Les fibres de verre obtenues en sortie de la centrifugation (2) sont soumises à un ensimage (3) par pulvérisation sur les fibres d'un produit d'ensimage qui peut être constitué de façon avantageuse par un silane du type A 1100. Ces fibres ainsi ensimées se déposent sous forme d'un matelas dans une hotte (4) de réception et sont transportées dans une étuve (5) de séchage pour ensuite être utilisées dans le procédé de l'invention. Des déchets provenant des découpeuses (6) de matelas de fibres de verre aux dimensions souhaitées pour d'autres applications et des panneaux (8) de rebuts (lorsque les panneaux de laine de verre obtenus ne présentent pas les propriétés physiques souhaitées pour les autres applications) peuvent éventuellement être utilisés comme élément de renfort selon le procédé de l'invention.

Le procédé de l'invention et les produits obtenus ne sont pas limités à l'utilisation de la laine de verre obtenue selon le procédé "TEL", tel que décrit dans le brevet EP 91866, mais peuvent s'étendre à tout autre procédé d'obtention de laine de verre.

De même, l'invention peut s'appliquer à n'importe quelle laine minérale par exemple à une laine de roche selon le procédé décrit dans le brevet EP 59512.

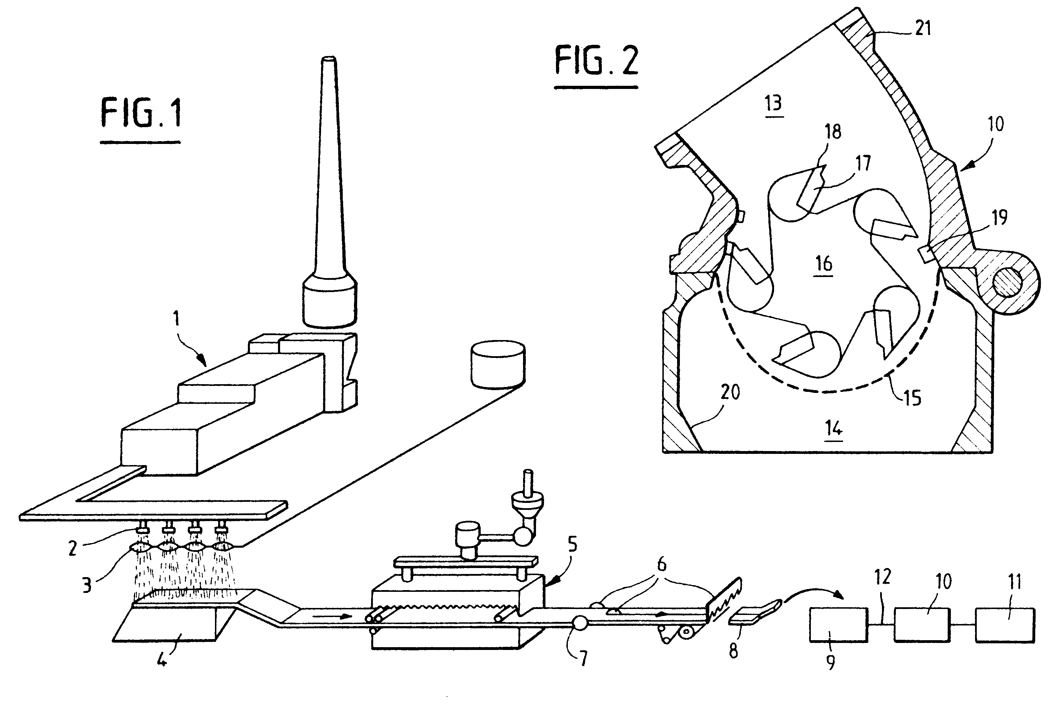

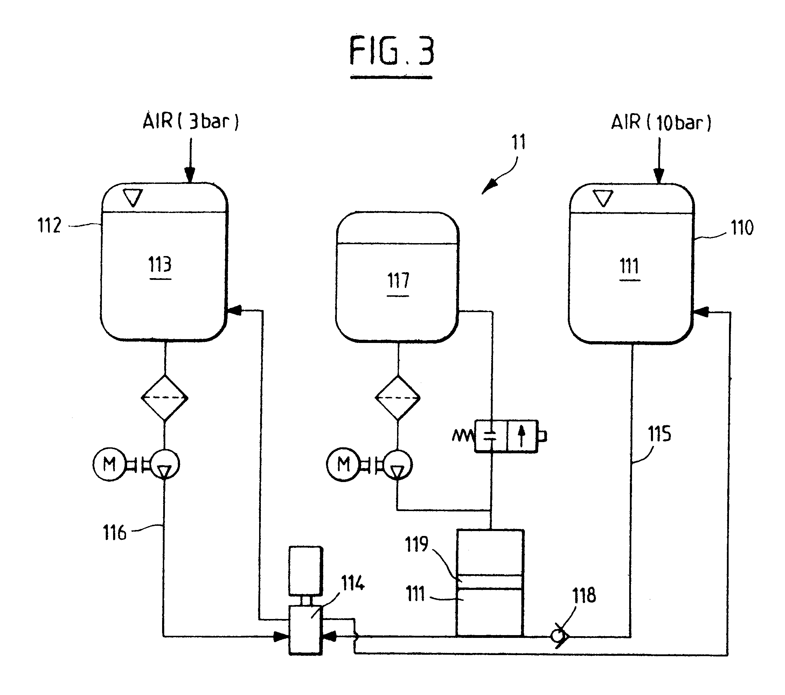

Le procédé de l'invention, dans son mode de réalisation préféré, consiste à rajouter, en sortie de la chaîne de fabrication des matelas de laine de verre ou de laine minérale ensimée de manière adaptée, une déchiqueteuse (9) permettant de travailler les matelas, ou les déchets, ou éventuellement les panneaux de rebuts, de façon à les transformer en flocons. La déchiqueteuse (9) est du même type que celles qu'on utilise habituellement pour broyer les déchets issus des rives des matelas. Les flocons transportés pneumatiquement en (12), sont amenés à une noduleuse (10) à couteaux (17) et contre-couteaux (19, figure 2). les couteaux (17) et contre-couteaux (19) sont espacés de 2 mm et disposés au-dessus d'une grille (15) dont les trous sont de 6 mm de diamètre. Dans une variante du procédé de l'invention, les matelas sont directement introduits dans la noduleuse sans avoir subi de déchiquetage. la noduleuse est du type broyeur à couteaux, commercialisé sous la dénomination "Rotoplex" par la société Alpine. les caractéristiques dimensionnelles des fibres constituant le matelas adapté au procédé de l'invention sont évaluées à l'aide de la mesure du "micronaire" aussi appelé indice de finesse. Cette mesure consiste à déterminer la perte de charge produite dans un débit d'air par un bouchon de fibres dont on cherche à déterminer les caractéristiques, ce bouchon étant comparé à un bouchon calibré. Pour plus de détails sur cette mesure on pourra se référer à la demande de brevet européen EP 0 455 553. Le matelas de laine minérale utilisé aura, de préférence, un micronaire au plus égal à 4 pour 5 grammes de fibres. lorsqu'on utilise une déchiqueteuse pour fabriquer les flocons, celle-ci (9) comporte essentiellement deux cylindres parallèles tournant en sens inverse et comportant des doigts qui, entre les cylindres, s'entrecroisent sans se toucher. Dans ce cas, à la sortie de la déchiqueteuse, un transporteur pneumatique (12) reprend les flocons pour les apporter à un deuxième appareil qui est représenté à la figure 2 et constitué par une noduleuse. Cette noduleuse (10) comporte une trémie d'entrée (21) et une buse de sortie (20), l'espace amont (13) est separé de l'espace aval (14) par une paroi (15) en tôle métallique percée de trous. Cette grille a la forme d'un cylindre qui est coaxial avec un tambour rotatif (16) comportant des couteaux (17) dont chaque tranchant (18) fait un angle faible avec l'axe du tambour rotatif et des contre-couteaux (19) séparés des couteaux (17) d'une distance d'environ 2 mm. Les trous ont un diamètre de 6 mm pour les fibres ayant un micronaire de 2,7 pour 5 grammes. La sortie de la buse (20) constituant la noduleuse est reliée à un deuxième circuit de transport pneumatique (12) par une vanne à écluse qui permet le passage des nodules sans perturber les circuits d'air. Ces nodules ainsi obtenus sont ensuite conditionnés et expédiés vers l'utilisateur ou bien utilisés directement en sortie. Ces nodules sont destinés à être mélangés dans un dispositif (11) à un des constituants de la matière qu'ils doivent renforcer. Dans le cas de l'application à un polymère thermodurcissable tel que le polyuréthane fabriqué selon le procédé RIM de moulage par injection réaction, les nodules obtenus en sortie de la noduleuse (10) sont mélangés à un des constituants, en l'occurrence de polyol. Le mélange (111) polyol fibre minérale est versé dans un container (110) qui est porté à une pression de 10 bars, comme représenté à la figure 3. le mélange (111) polyol + nodules de fibres est convoyé dans une canalisation (115) munie d'un clapet anti-retour (118) vers une tête de mélange (114) pour y être mélangé sous pression avec un isocyanate (113) provenant d'un récipient (112) sous pression à 3 bars. Un piston (119) actionné par de l'huile (117) permet le mélange sous pression du mélange polyol + fibres (111) avec l'isocyanate (113). Le tout est alors injecté dans le moule selon la technique RIM bien connue.

Ce procédé permet de fabriquer ainsi des matières plastiques, en l'occurrence des thermodurcissables tels que du polyuréthane renforcé de façon homogène par des produits minéraux fibreux. Cette technique de renforcement est particulièrement intéressante pour l'industrie automobile. En effet cette dernière s'intéresse de façon générale au moulage du polyuréthane par la technique RIM sans renforcement en raison de la rapidité du temps de cycle, de la pression modérée nécessaire au moulage, du bon aspect de surface et de la bonne résistance aux chocs du matériau. Toutefois ces avantages sont limités par la stabilité dimensionnelle insuffisante des pièces lorsqu'elles traversent une étuve de séchage de peinture.

Le renforcement du polyuréthane selon la technique évoquée ci-dessus permet d'assurer le meilleur compromis entre la conservation des bonnes propriétés de choc des polymères, le bon aspect de surface et la stabilité dimensionnelle. le mélange de la laine minérale dans une proportion pondérale de 20 % au polyuréthane permet de conserver une viscosité suffisamment basse au mélange pour permettre l'injection selon la technique RIM.

Il est bien évident que les nodules de laine minérale obtenus en sortie de la noduleuse (10) peuvent également être utilisés pour renforcer tout autre matériau thermodurcissable ou toute autre matière plastique pour améliorer ses caractéristiques mécaniques ou physiques.

Ainsi, il est possible de renforcer différents thermoplastiques tels que par exemple, le polypropylène. Dans ce cas les renforcements sont réalisés au cours de l'extrusion, par incorporation en prémélange des renforts sur une extrudeuse telle que l'extrudeuse bivis co-rotatives Werner-Pfleiderer. On obtient ainsi des granules de résine renforcée qui sont ensuite exploités de la manière habituelle. Pour réaliser des échantillons, on a utilisé une presse Billion H 330/140 et un moule à 7 empreintes. Ces éprouvettes étaient destinées à des essais mécaniques qui seront détaillés plus loin et à des examens d'aspect.

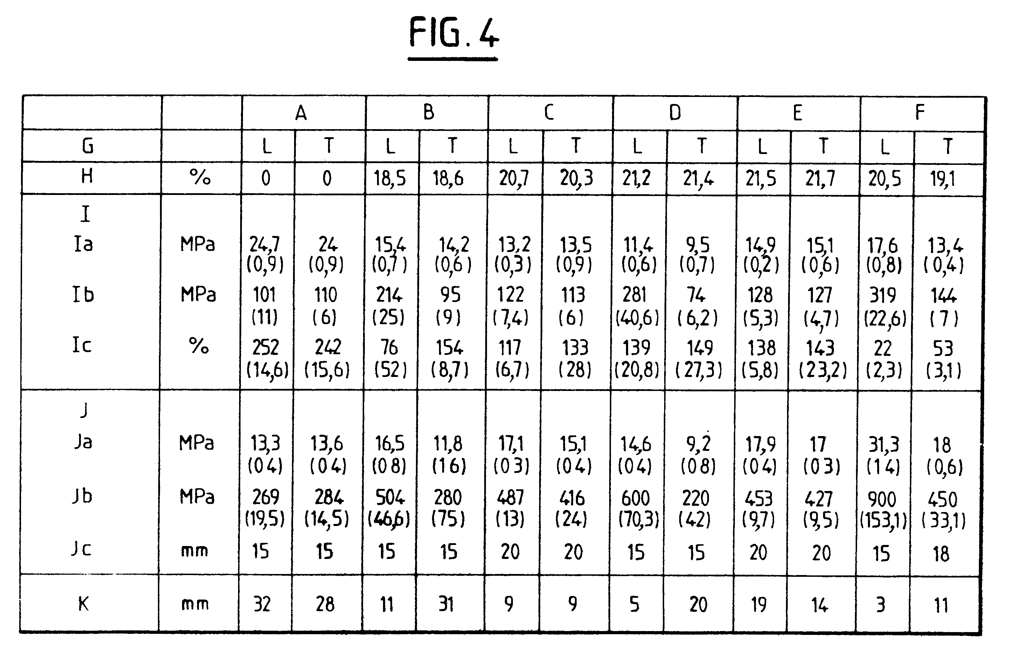

En ce qui concerne le polyuréthane, le tableau de la figure 4 résume les propriétés mécaniques d'une matière renforcée à l'aide de fibres nodulées obtenues à partir de fibres de laine de verre vierges (référence D) ou ensimées au silane A 1100 (référence E). Les propriétés mécaniques sont comparées aux propriétés du polyuréthane pur dans la colonne (A) et aux propriétés de ce polyuréthane renforcé à l'aide de fibres de verre textile broyées préparées sans ensimage préalable (colonne B et C) et aux propriétés d'un matériau renforcé à l'aide de fibres de verre textile broyées ensimées (F). Chaque colonne de produit est subdivisée en deux sous-colonnes, une première marquée (L) indiquant les mesures effectuées longitudinalement et une deuxième (T) pour les mesures effectuées transversalement. La ligne (G) indique le sens de mesure, la ligne (H) donne le taux pondéral des fibres dans le mélange, la subdivision (I) correspond à des mesures effectuées en traction, (Ia) correspond aux mesures de contraintes à la rupture, la ligne (Ib) correspond au module à l'origine, la ligne (Ic) indique l'allongement à la rupture. La subdivision (J) correspond aux mesures effectuées en flexion, la ligne (Ja) correspond aux contraintes au moment de la rupture, la ligne (Jb) indique le module à l'origine et (Jc) la flèche imposée. La subdivision (K) indique le SAG exprimé par la flèche de l'éprouvette après l'avoir

4

soumise à 160° pendant une heure. On constate, à la lecture de ce tableau, que les propriétés mécaniques de traction et flexion du matériau (E) obtenu à l'aide de nodules de laine de verre ensimés sont assez proches de celles obtenues à l'aide de fibres de verre textile broyées ensimées (F) et en tout cas bien supérieures à celles obtenues par les matériaux renforcés à l'aide de fibres textiles non ensimées (B).

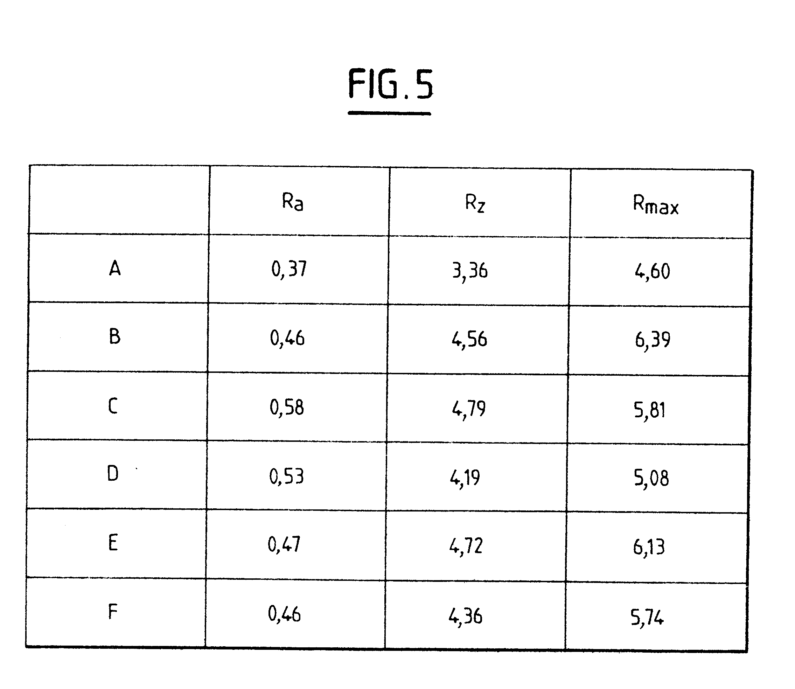

Enfin, indépendamment de l'amélioration des propriétés mécaniques de la matière renforcée, on peut constater que celle-ci ne se fait pas au préjudice notable de l'état de surface ou de l'aspect de surface de cette matière renforcée. En effet, la figure 5 représente les rugosités mesurées par un rugosimètre "perthometer" avec lequel on détermine les grandeurs caractéristiques $R_a$, $R_z$ et $R_{max}$ exprimées en microns.

∗ $R_a$ représente la valeur moyenne des défauts de surface du profil mesuré,

∗ $R_z$ est la valeur de la moyenne des cinq plus gros défauts et

∗ $R_{max}$ la valeur du plus gros défaut.

On peut constater sur cette figure 5 que les valeurs obtenues pour les produits (D) et (E) sont assez proches de celles obtenues par les produits renforcés à l'aide de fibres textiles broyées (B, C) et que dans le cas du (E) les résultats sont meilleurs en ce qui concerne la grandeur $R_a$ que pour les matériaux obtenus à partir des fibres textiles (C) ou (D) ce qui reflète assez bien la qualité d'ensemble de l'aspect de la surface.

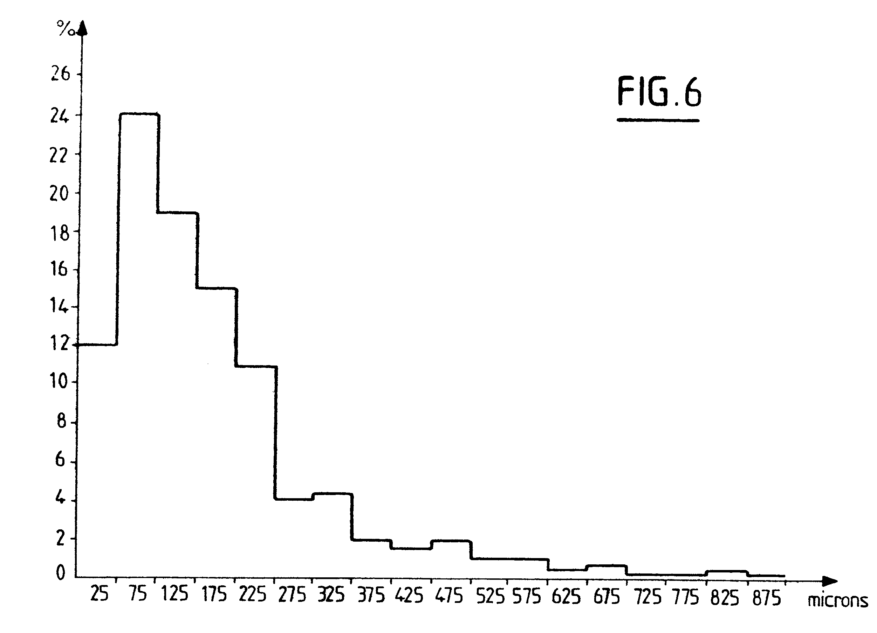

Enfin la figure 6 donne la distribution des longueurs de fibres obtenues à partir du produit (D) après broyage de la laine de verre non ensimée. On constate que la longueur moyenne est de 0,17 mm, ce qui est une valeur approchante des valeurs utilisées pour les fibres de verre textile dont la valeur moyenne se situe à 0,21 mm. On constate aussi que 80 % des fibres ont une longueur inférieure à 0,25 mm. Ainsi donc le procédé et le dispositif mettant en oeuvre le procédé permettent de créer un matériau renforcé nouveau à l'aide d'une matière de renforcement de base moins onéreuse à fabriquer. Ce polyuréthane ainsi renforcé permet d'obtenir un état de rugosité et un aspect de surface aussi bons, si ce n'est meilleurs, que ceux obtenus à l'aide du même matériau renforcé avec des fibres de verre textile broyées.

En plus de cette série d'essais mécaniques et d'études de l'aspect réalisés sur un matériau thermodurcissable, la même comparaison a été effectuée sur un matériau thermoplastique, en l'occurence comme on l'a vu, le polypropylène (PP). Elle a eu lieu entre une résine PP renforcée avec de la laine de verre ensimée avec un Silane A 1100 identique à celle testée ci-dessus mais avec ici des quantités pondérales variables de 10, 20, 30, 40 et 50 % par comparaison avec la même résine chargée des mêmes quantités de fibres de verre textile et de talc. les tests étaient réalisés dans les conditions de la norme ISO 170 pour la flexion et de la norme ISO 3268 pour la traction.

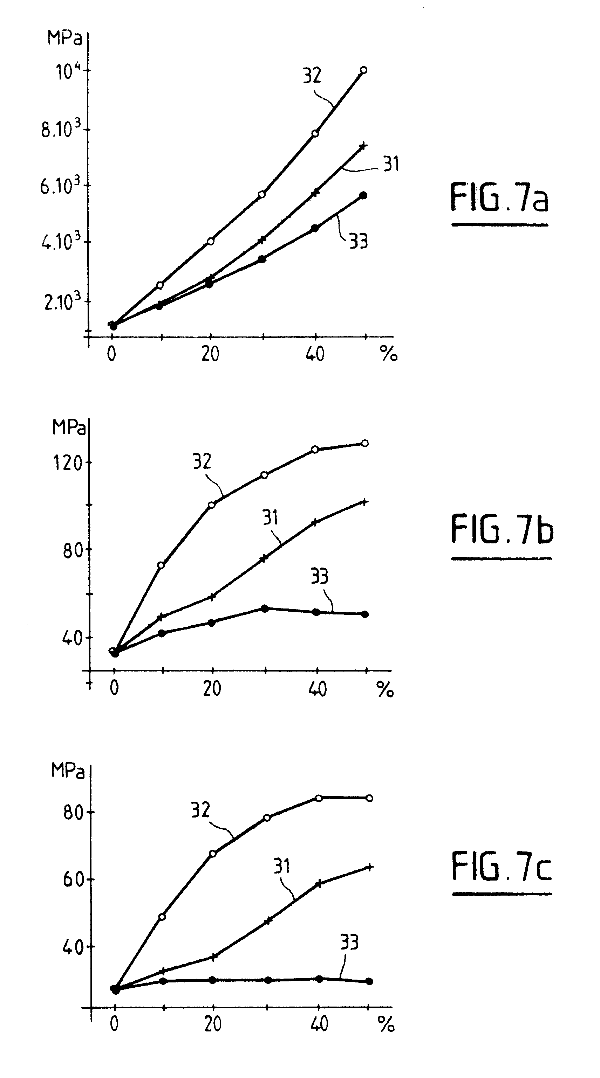

Ces résultats sont présentés sous forme de courbes dans la figure 7. En 7a, on voit les modules de flexion de l'échantillon en mégapascals, en 7b la contrainte de rupture sous flexion avec la même unité et, de même, en 7c la contrainte de rupture en traction. les résultats montrent que les fibres de laine de verre 31 améliorent les performances de la résine et celà dans une mesure intermédiaire entre les fibres de verre textile 32 et une charge neutre comme le talc 33.

On a également observé l'aspect de la surface des échantillons et mesuré leur rugosité au Perthometer. Les résultats figurent dans le tableau :

| | Ra (µm) | Rz (µm) | Rmax (µm) |
|---|---|---|---|
| Nodules de laine de verre | 0,24 | 2,3 | 3,1 |
| Fibres de verre textile | 0,64 | 4,0 | 5,1 |

On voit donc qu'aussi bien comme renfort de thermoplastique, que comme renfort de thermodurcissable, les nodules de laine de verre présentent une solution intéressante, aussi bien sur le plan des performances mécaniques que sur celui de l'aspect.

En plus des performances, ce procédé présente en outre l'avantage de réduire considérablement le coût du produit ainsi renforcé, étant donné que le coût de la laine minérale est bien inférieur à celui de la fibre textile et qu'il permet éventuellement d'utiliser des déchets ou des rebuts de fabrication de laine minérale.

Enfin, il est bien évident que ce procédé de fabrication ainsi que le dispositif peuvent être utilisés pour la fabrication de produits renforcés à partir de fibres de roche ou de laine de roche, ou encore de tout autre matériau fibreux.

5

**Revendications**

1. Procédé de renforcement d'un polymère **caractérisé en ce qu'**il comporte les étapes suivantes :
   a - fabrication d'un matelas de laine minérale type isolation ;
   b - déchiquetage du matelas et/ou de déchets de laine minérale pour former des flocons ;
   c - nodulage des flocons à l'aide d'une noduleuse ;
   d - mélange des nodules au polymère ou à au moins un des composants fluide du polymère avant durcissement ;
   e - durcissement du polymère de la manière habituelle.

2. Procédé de renforcement d'un polymère selon la revendication 1, **caractérisé en ce que** les opérations b et c sont remplacées par le nodulage direct du matelas à l'aide d'une noduleuse.

3. Procédé de renforcement d'un polymère selon la revendication 1 ou la revendication 2, **caractérisé en ce que** les nodules comportent des fibres dont l'histogramme des longueurs comprend 80 % de fibres de longueur inférieure à 0,50 mm.

4. Procédé de renforcement d'un polymère selon la revendication 3, **caractérisé en ce que** les nodules comportent des fibres dont l'histogramme des longueurs comprend 80 % de fibres de longueur inférieure à 0,25 mm.

5. Procédé de renforcement d'un polymère selon l'une des revendications précédentes, **caractérisé en ce que** le polymère est une matière thermodurcissable.

6. Procédé selon la revendication 5, **caractérisé en ce que** le polymère est mis en oeuvre selon la technique RIM.

7. Procédé selon la revendication 5 ou 6, **caractérisé en ce que** le polymère est à base de polyuréthane.

8. Procédé de renforcement d'une polymère selon l'une des revendications 1 à 4, **caractérisé en ce que** le polymère est une matière thermoplastique.

9. Procédé selon la revendication 8, **caractérisé en ce que** le mélange des nodules avec le polymère est effectué dans une boudineuse.

10. Procédé selon la revendication 8 ou la revendication 9, **caractérisé en ce que** la matière thermoplastique est à base de polypropylène.

11. Procédé selon l'une des revendications précédentes, **caractérisé en ce que** la fibre minérale est ensimée avec une solution aqueuse comportant un silane.

12. Procédé selon la revendication 11, **caractérisé en ce que** l'ensimage est à base d'un silane du type A 1100.

13. Dispositif destiné à préparer des matelas de fibres de laine minérale type isolation pour rendre leurs fibres aptes au renforcement de matières plastiques, **caractérisé en ce qu'**il comporte une noduleuse (10) équipée d'une grille dont les trous ont des dimensions comprises entre 4 et 8 mm.

14. Dispositif selon la revendication 13, **caractérisé en ce que** la noduleuse est équipée d'une grille dont les trous ont pour dimension 6 mm.

15. Dispositif selon la revendication 13, **caractérisé en ce que** les couteaux (17) de la noduleuse (10) sont distants des contre couteaux (19) d'une distance inférieure à 3 mm et de préférence de 2 mm.

16. Dispositif selon l'une des revendications 13 à 15, **caractérisé en ce qu'**il comporte une déchiqueteuse (9) qui transforme les matelas ou les déchets de laine minérale en flocons avant leur introduction dans la noduleuse (10).

FIG. 2

FIG. 1

# FIG.3

AIR ( 3 bar )

AIR ( 10 bar )

11

112

113

117

111

110

115

116

119

111

114

118

EP 0 519 828 A1

8

# FIG.4

| | | A | | B | | C | | D | | E | | F | |
|---|---|---|---|---|---|---|---|---|---|---|---|---|---|
| G | | L | T | L | T | L | T | L | T | L | T | L | T |
| H | % | 0 | 0 | 18,5 | 18,6 | 20,7 | 20,3 | 21,2 | 21,4 | 21,5 | 21,7 | 20,5 | 19,1 |
| I | | | | | | | | | | | | | |
| Ia | MPa | 24,7 (0,9) | 24 (0,9) | 15,4 (0,7) | 14,2 (0,6) | 13,2 (0,3) | 13,5 (0,9) | 11,4 (0,6) | 9,5 (0,7) | 14,9 (0,2) | 15,1 (0,6) | 17,6 (0,8) | 13,4 (0,4) |
| Ib | MPa | 101 (11) | 110 (6) | 214 (25) | 95 (9) | 122 (7,4) | 113 (6) | 281 (40,6) | 74 (6,2) | 128 (5,3) | 127 (4,7) | 319 (22,6) | 144 (7) |
| Ic | % | 252 (14,6) | 242 (15,6) | 76 (52) | 154 (8,7) | 117 (6,7) | 133 (28) | 139 (20,8) | 149 (27,3) | 138 (5,8) | 143 (23,2) | 22 (2,3) | 53 (3,1) |
| J | | | | | | | | | | | | | |
| Ja | MPa | 13,3 (0 4) | 13,6 (0 4) | 16,5 (0 8) | 11,8 (16) | 17,1 (0 3) | 15,1 (0 4) | 14,6 (0 4) | 9,2 (0 8) | 17,9 (0 4) | 17 (0 3) | 31,3 (1 4) | 18 (0,6) |
| Jb | MPa | 269 (19,5) | 284 (14,5) | 504 (46,6) | 280 (75) | 487 (13) | 416 (24) | 600 (70,3) | 220 (42) | 453 (9,7) | 427 (9,5) | 900 (153,1) | 450 (33,1) |
| Jc | mm | 15 | 15 | 15 | 15 | 20 | 20 | 15 | 15 | 20 | 20 | 15 | 18 |
| K | mm | 32 | 28 | 11 | 31 | 9 | 9 | 5 | 20 | 19 | 14 | 3 | 11 |

EP 0 519 828 A1

# FIG.5

|     | $R_a$ | $R_z$ | $R_{max}$ |
| --- | --- | --- | --- |
| A   | 0,37 | 3,36 | 4,60 |
| B   | 0,46 | 4,56 | 6,39 |
| C   | 0,58 | 4,79 | 5,81 |
| D   | 0,53 | 4,19 | 5,08 |
| E   | 0,47 | 4,72 | 6,13 |
| F   | 0,46 | 4,36 | 5,74 |

EP 0 519 828 A1

FIG.6

FIG.7a

FIG.7b

FIG.7c

Office européen
des brevets

**RAPPORT DE RECHERCHE EUROPEENNE**

Numero de la demande

EP    92 40 1710

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 371 847 (ISOVER SAINT-GOBIN) <br><br> * le document en entier * <br> --- | 1-5, 7-14,16 | B29C67/16 <br> C03B37/10 |
| A | US-A-4 444 703 (DOMINGUEZ ET AL.) <br> * colonne 1, ligne 35 - ligne 46 * <br> --- | 6,7 | |
| A | GB-A-2 069 876 (AMFU) <br> * page 1, ligne 74 - ligne 98 * <br> --- | 13-16 | |
| A | US-A-2 830 772 (MARTIN) <br> * revendications; figures * <br> --- | 13-16 | |
| A | PATENT ABSTRACTS OF JAPAN <br> vol. 014, no. 513 (C-0777)9 Novembre 1990 <br> ( UBE IND ) 23 Août 1990 <br> & JP-A-2 212 532 <br> * abrégé * <br> --- | | |
| A | PATENT ABSTRACTS OF JAPAN <br> vol. 6, no. 98 (C-106)8 Juin 1982 ( <br> TAKASAKI SEISHI ) 15 Février 1982 <br> & JP-A-57 028 137 <br> * abrégé * <br> ----- | | **DOMAINES TECHNIQUES RECHERCHES (Int. Cl.5)** <br><br> B29C <br> C03B |

Le présent rapport a été établi pour toutes les revendications

| Lieu de la recherche | Date d'achèvement de la recherche | Examinateur |
|---|---|---|
| LA HAYE | 30 SEPTEMBRE 1992 | VAN WALLENE A.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P0402)